Europäisches Patentamt

European Patent Office

Office européen des brevets

(11) Publication number: **0 404 753**
**A1**

(12)

# EUROPEAN PATENT APPLICATION

(21) Application number: 90870100.6

(22) Date of filing: 22.06.90

(51) Int. Cl.⁵ **C09D 5/03, C09D 201/00,
//(C09D201/00,127:12,133:10,
163:02)**

(30) Priority: 22.06.89 PCT/BE89/00030

(43) Date of publication of application:
27.12.90 Bulletin 90/52

(84) Designated Contracting States:
DK GR

(71) Applicant: **FINA RESEARCH S.A.
Zone Industrielle C
B-6520 Seneffe (Feluy)(BE)**

(72) Inventor: **Rijkse, Ludwig Karl
Nicolaas van der Laanstraat 10
NL-2013 BM Haarlem(NL)**
Inventor: **Sietses, Willem
Valeriuslaan 33
NL-1422 HS Uithoorn(NL)**
Inventor: **Gillard, Michel
Rue d'Ardenelle 85
B-5830 Corroy-le-Château(BE)**

(74) Representative: **Leyder, Francis et al
c/o Fina Research S.A. Zone Industrielle C
B-6520 Feluy (Feluy)(BE)**

(54) **Thermosetting powder compositions for primer coatings suitable for PVdF-based top coatings.**

(57) Powder compositions comprising 5-15 wt% of a thermosetting binder system based on a resin compatible with PVdF, 50-90 wt % of a thermosetting binder system based on a resin incompatible with PVdF, 0-35 wt % of pigments and 0-3 wt % of levelling agent are suitable for later application of a pigmented PVdF-based top coating. Preferred compositions are based on an epoxy system comprising about 8 wt % of fluorinated or acrylic resin, 5-25 wt % of pigments and 0.7-1 wt % of levelling agent.

EP 0 404 753 A1

# THERMOSETTING POWDER COMPOSITIONS FOR PRIMER COATINGS SUITABLE FOR PVdF-BASED TOP COATINGS

## Field of the invention

The present invention relates to powder compositions and their use as primer coatings. In particular, the present invention relates to powder compositions for obtaining primer coatings for coatings based on poly-(vinylidene fluoride), hereinafter referred to as PVdF, without using solvents.

The present invention also relates to a process for preparing powder compositions and to a process for coating a substrate with said composition.

## Background

PVdF is characterized by a series of valuable properties which make its use as binding agent appear desirable. Thus, it is stable towards aggressive chemicals, thermally stable, dirt-repellent, scratch-resistant, weather-resistant and is not broken down by UV irradiation. The durability of PVdF is evidenced by its tough finish as well as its ability to provide a finish that will not craze or chalk with the changing weather conditions.

Because of these advantageous properties, PVdF-based coatings are known to be very useful as protective coatings for a variety of substrates, more particularly for building panels and other articles made from metal sheets which are intended for outdoor use.

The Applicant has developed a process for preparing pigmented PVdF-based powder coating products, as disclosed in EP-A-259290.

However, while PVdF-based compositions provide a very satisfactory topcoating, they adhere poorly to metal substrates and have less than satisfactory corrosion resistance. Thus, PVdF-based coatings usually need to be applied on a suitable primer coating, mainly for improving adhesion to the substrate but also in order to improve corrosion resistance of the substrate. This is particularly necessary with metal substrates such as steel and aluminium. For this reason, many different primer coating compositions have been formulated. The composition of the primer depends, among other factors, on the topcoat which will subsequently be applied to it.

As primer for PVdF topcoats, it has already been proposed to use compositions of an acrylic resin, an epoxy resin and an organosilicon or organoaluminium compound; however, these compositions require the latter compounds, which are designed to improve the adhesion to the substrate and are delicate to use.

EP-A-294755 discloses a PVdF-based liquid coating product, based on a solvent and a ternary polymer mixture of PVdF, a second polymer incompatible therewith, and a compatibilizer, which is to be used as topcoat without primer coating. However, the preferred choice of an epoxy resin as incompatible polymer considerably reduces the weathering resistance of the resulting coating.

Although the known wet systems may give good results, environmental protection laws throughout the world, but mainly in the U.S.A. and Europe, are making it increasingly difficult to handle solvent-based coating systems. Further, the recovery of the solvent is a costly procedure. Still further, use of both a powder top coating and a wet primer system would require two separate application equipments, thus increasing fixed costs. Accordingly, there is a significant need for solventless powder compositions for obtaining primer coatings.

However, it is difficult to find a primer composition for PVdF powder coatings that will yield a system having good properties. Accordingly, there is a significant need in the art for improved solvent-free compositions for obtaining primer coatings for PVdF-based powder coatings, said primer coatings being capable of adhering well to a metal substrate as well as having good intercoat adhesion with the PVdF-based topcoats while providing good corrosion resistance to the substrate. Additionally, the primer itself must retain its integrity, i.e. neither craze nor deteriorate.

## Objects of the invention

It is an object of the present invention to provide powder primer products.

It is another object of the present invention to provide powder primer products suitable for PVdF-based powder coating products.

It is yet another object of the present invention to provide a process of preparing such powder primer products without the use of solvents at any step thereof.

Still another object of the invention is to provide a process for coating a substrate with a primer coating for PVdF-based topcoats.


## Summary of the invention


Accordingly the present invention provides powder products, comprising as binding agent

(i) from about 5 to about 15 % by weight, based on the total weight of the product, of a thermosetting binder system based on a resin compatible with PVdF; and

(ii) from about 50 to about 90 % by weight, based on the total weight of the product, of a thermosetting binder system based on a resin incompatible with PVdF.

The present invention also provides the use of the powder products as primer coatings, more particularly as primer coating for PVdF-based top coatings.

The present invention further provides a substrate coated with the primer and a process for coating a substrate with a primer coating, said primer coating being suitable for later application of a pigmented PVdF-based top coating by applying a pigmented PVdF-based powder on said primer coating and subjecting it to a heat treatment, preferably at a temperature of about 180 to 260°C, said process comprising the steps of :

(a) applying the primer powder on a substrate;

(b) subjecting the primer coating to a heat treatment, preferably at a temperature of about 160 to 240°C.


## Detailed description of the invention


The following description is to further illustrate the invention but should not be considered limitative of the reasonable scope thereof.

A thermosetting binder system consists essentially of a thermosetting resin. Thermosetting resins contain cross-linking sites; upon the application of heat, and in the presence of an appropriate curing agent if the nature of the cross-linking sites requires it, they cure to the final resin which will be mechanically strong, resistant to chemical attack and adherent to the substrate. Such thermosetting resins are usually obtained by copolymerisation with a minor amount of comonomer units containing a cross-linking site. Such sites are usually reactive groups like hydroxy, carboxyl, amino and glycidyl groups, which may be cross-linked using a curing agent which is exemplified by polyisocyanate compounds (usually diisocyanates like isophorone diisocyanate, xylylene diisocyanate, or hexamethylene diisocyanate), dimers and trimers thereof, and blocked isocyanate compounds (blocked at the isocyanate group with a blocking agent such as epsilon-caprolactam, phenol, benzyl alcohol or methyl ethyl ketoxime).

If the thermosetting resin is not of the self-curing type, a curing agent is required, the amount of which may vary over a considerable range, depending on the particular type of curing agent selected and on the degree of curing desired.

A wide choice of thermosetting binder systems, designed for use in powder coatings, is available. They are known in the art, so that a complete description is not required herein.

The primer products contain from about 5 to about 15 wt %, preferably about 8 wt %, of a thermosetting binder system based on a resin compatible with PVdF, preferably selected from the group consisting of fluorinated polymers, acrylic polymers, and mixtures thereof.

The amount of the compatible thermosetting resin comprised in the powder composition is an amount sufficient to improve the adhesion of the resulting primer coating with PVdF-based top coatings. It is possible to include in the composition a minor amount (e.g. less than 4 wt %) of a PVdF-compatible thermoplastic resin.

The compatibility of two polymer resins can be detected by any one of a wide variety of methods known in the art (see e.g. "Polymer Blends", D.R. Paul et al., Eds., 1978 and "Polymer-Polymer Miscibility", O. Olabisi et al., 1979, both from Academic Press, New York). However, one method is most commonly used, namely the determination of the glass transition temperature $T_g$, which may be carried out using several methods including spectroscopy and calorimetry. Indeed, it is generally accepted that compatible blends are indicated by a single glass transition temperature.

The preferred method used by the Applicant is differential scanning calorimetry, better known as DSC. Polymer blends are obtained by vacuum (< 10 Pa) removal of the solvent from a 3% solution in dimethylformamide, first at room temperature then at 100°C, before being slowly cooled to ambient temperature. DSC measurements are carried out using three successive cycles of heating at 20°C/min, maintaining at the maximum temperature for 10 minutes, cooling at 20°C/min and maintaining at the minimum temperature also for 10 minutes. Tg is defined as the temperature corresponding to the inflection point at half the specific heat difference $C_p$ observed with the transition during the second and third heating steps.

However, as a screening method, it is also possible to visually evaluate the compatibility by the clarity of a film cast from a homogeneous solution of the polymer mixture, the polymers being compatible if the film exhibits no heterogeneity under considerable magnification.

Numerous types of thermosetting resins are known in the art, as exemplified by the following non-limitative citations. US-A-4345057 discloses curable fluorinated copolymers of the vinyl type, prepared from about equal molar amounts of fluorinated olefin units and substituted vinyl ether units, including 3 to 15 mol % of hydroxyalkyl vinyl ether units. Other copolymers of a fluoroolefins and a comonomer having a cross-linkable reactive group like hydroxy, carboxyl, amino and glycidyl groups, are disclosed in EP-A-301557. As an example of thermosetting acrylate, there may be cited those copolymers incorporating 3 to 8% of 2-hydroxyethyl acrylate together with other non-reactive comonomers, disclosed in US-A-4659768.

The composition of the powder products of the invention comprises from about 50 to about 90 wt % of a thermosetting binder system based on a resin incompatible with PVdF.

Mainly to meet the corrosion resistance requirements, it is preferable to use a system based on a solid epoxy resin with an appropriate curing agent. Solid epoxy resins which are useful in the practice of this invention are exemplified by, but not limited to, resins produced by reacting epichlorhydrin and bisphenol A and having an epoxy equivalent weight of from 400 to 1800. Numerous other examples may be found in the prior art, e.g. in US-4 255 553-A or in "Handbook of Epoxy Resins" (Lee and Neville, 1967, McGraw-Hill).

The preferred curing agent for these epoxy resins is dicyandiamide ($NC-N = C-(NH_2)_2$) which provides coatings with suitable reactivity, excellent mechanical properties, and chemical and corrosion resistance. The preferred concentration range for dicyandiamide is of from about 4% to about 10% by weight of the epoxy resin.

The powder coating composition of the present invention can be admixed according to need with various kinds of additives conventionally formulated in coating compositions. Examples of the additives compounded with the inventive powder coating composition include pigments, extenders, levelling agents, ultraviolet absorbers, thermal aging retarders and so on. These additives can be used either singly or as a combination.

The compositions of the invention contain from 0 to about 35 wt % of pigments. The use of pigments in the coating composition of the present invention is optional. If no pigment is used, this results in a clearcoat composition; no visual control will be available when applying such clearcoat manually, and the coating thus obtained may be unevenly thick.

When pigments are used, any pigment or combination of pigments can be used provided they are resistant to the subsequent heat treatments. The powder composition preferably contains from 5 to 25 wt % of pigments.

The powder composition may optionally contain up to 3 wt % of a levelling agent. Although a levelling agent is not essential to the invention, it helps obtain the high quality of coating surface required in the art.

The amount of levelling agent can vary widely from about 0 to 3 wt % based on the total weight of the mixture, but the amount preferably used is of about 0.7 to about 1 wt % based on the total weight of the mixture.

The extruding and granulating (pelletising) of the resulting mixture above can be conducted following standard procedures. The operating procedures and conditions are easily determined by one skilled in that art. The processing temperature is preferably from about 90°C to 140°C with about 100°C being most preferred. The dimensions of the pellets are not critical parameters, however the pellets are usually about 3mm in diameter and 2mm in length.

In an embodiment of the invention, a master-batch is first prepared with the PVdF-compatible resin and the non-compatible thermosetting binder resin in a weight ratio of from about 1:1 to 1:4; it is then extruded with the remainder of the components.

EP 0 404 753 A1

Grinding the pellets may be accomplished by any means which allows suitable particles to be obtained. The resulting powder should comprise particles of size and shape suitable for achieving constant flow through the application equipment, mainly in order to obtain a constant thickness of the coating. It is preferred that the shape of the particles be as spherical as possible, because the resulting powder has better flowing properties. Regarding the size of the particles, the grinding step is, if needed, associated with a sieving step for eliminating the largest size particles, i.e. those particles exceeding about three times the desired thickness of the coating. On the other hand, excessively small particles (i.e.< 1.5 um wherein um stands for micrometer) are to be avoided, because they are a health hazard and tend to block the transport lines during application. Accordingly it is preferred that the particles of the ground primer powder have an average particle size between about 0.03 and 0.05 mm.

The grinding step is preferably carried out at room temperature, or at least at a temperature no higher than about + 50°C. Compositions containing high amounts of thermoplastic resin should be ground at lower temperatures, i.e. below about + 20°C.

It is envisioned according to the present invention that a particularly useful grinding process would be any process of grinding that includes the removal of ground particles below a predetermined size (to avoid overgrinding) and the retention of larger particles for further grinding.

The resulting powder can be applied on the substrate by any means suitable for achieving an even distribution of the particles. In particular, the powder can be applied by any electrostatic spray application apparatus, whereby the charges particles are sprayed onto the oppositely charged substrate. Alternative application techniques include, for example cloud chamber, fluidised bed, and even in some cases triboelectric coating, and the like. Such techniques are well known in the art and need not to be described further.

After the powder has been applied to the substrate, it must be subjected to a heat treatment at a temperature sufficient to melt and cross-link at least a portion thereof. The heat treatment preferably comprises passing the coated substrate into a heated oven wherein the coating is finally baked at a temperature from about 160°C to 240°C. The temperature used in this step should be higher than the crystalline melting point of the powder, which melting point is easily determined experimentally. On the other hand, excessively high temperatures have an adverse effect on most properties of the primer coating. The duration of the heating step is easily determined by one skilled in the art, using known suitable methods.

After cooling of the primer coating, the top coating composition is applied thereon and subjected to a suitable second heat treatment which should however not exceed about 240°C.

Although the coating compositions of the invention are particularly adapted as primer for PVdF-based powder topcoatings, they may also be used in combination with other powder topcoatings or even with liquid (i.e. solvent-based) topcoatings.

In order to further illustrate the invention, the following examples are given which are intended not to limit the scope of the invention.

Examples

In all the following examples, all values are in parts by weight, except where otherwise stated, and the following definitions apply : Dicyandiamide designates a commercially available dicyandiamide-type curing agent sold under the name EPIKURE 107 FF by SHELL.

Solid epoxy resin E designates a commercially available epoxide resin, manufactured from bisphenol A and epichlorhydrin, having an epoxy molar mass (weight per epoxide equivalent) of 775 g and a melting point of about 65°C (sold under the name EPIKOTE 3003 by SHELL; similar products are available from other manufacturers).

Levelling agent M designates MODAFLOW POWDER III by MONSANTO Master batches were prepared by melting the two resins together while mixing them, cooling the mixture and granulating the resulting solid which contained 70 wt % (as verified by a determination of the epoxy number) of solid epoxy resin E and 30 wt% of either a PVdF-compatible thermosetting resin C or another non-compatible thermosetting resin Z (for comparative purposes only).

- Master batches F and G contained as resin C thermosetting acrylic resins obtained by vacuum distillation of the solvent from the resins prepared according to the procedure described in US Patent 4,659,768 to DE SOTO respectively under the denomination "Control resin" and "Experimental resin".

- Master batch H contained as resin C a thermosetting resin obtained by vacuum distillation of the solvent from the commercial fluorinated resin sold under the name LUMIFLON LF 200 by ICI as a xylene solution

5

having a non-volatile content of 60 %, a viscosity of 4 Pa.s at 25°C, and an OH value (mg KOH/g) of 32.
- Master batch J contained as resin Z a commercial thermosetting acrylic resin (hydroxyl value : 40-46, acid value : 14-18, softening point (ring and ball method) : 107°C) sold under the name JONCRYL 800 by JOHNSON WAX.

Grinding, application and topcoating

The pelletised primer compositions were ground in a RETSCH laboratory grinding unit before passing through a 0.12 mm sieve. The resulting powders were applied by an electrostatic spray process on a 2mm thick chromated aluminium plate, heated 10 minutes at 180°C (object temperature) to give a 50 um primer coating and topcoated by a 50 um PVdF-based powder coating as described in Example 1 of EP-A-259290.

Examples 1 - 3 and Comparative Example 4

Primer paints were prepared by extruding and granulating the following ingredients :

|                      | Ex. 1  | Ex. 2  | Ex. 3  | Ex. C4 |
| -------------------- | ------ | ------ | ------ | ------ |
| Solid epoxide resin E | 50.55  | 49.49  | 45.48  | 50.55  |
| Dicyandiamide        | 3.65   | 3.59   | 3.5    | 3.65   |
| Master batch F       | 26.7   | -      | -      | -      |
| Master batch G       | -      | 26.7   | -      | -      |
| Master batch H       | -      | -      | 30.0   | -      |
| Master batch J       | -      | -      | -      | 26.7   |
| Levelling agent M    | 0.8    | 0.8    | 0.8    | 0.8    |
| Titanium dioxide     | 16.3   | 16.3   | 16.0   | 16.3   |
| Cross-linking agent  | 2.0    | 3.12   | 4.22   | 2.0    |
|                      | 100.0  | 100.0  | 100.0  | 100.0  |

The cross-linking agent for the thermosetting resin contained in the master batches of all these primer compositions was an epsilon-caprolactam blocked isocyanate sold under the name ADDUCT B-1530 by HULS; thus, during the heat treatment of the powder primer, epsilon-caprolactam was expelled in the oven.

The coating system of Example 1 withstood a reverse impact (according to ASTM D 2794 or ECCA-T5) of 2 N.m; the intercoat adhesion between the primer and the PVdF topcoat was excellent.

The coating system of Example 2 also had a reverse impact resistance of 2 N.m. Adherence of the primer on aluminium was insufficient but intercoat adhesion was excellent.

The primer of Example 3 showed some yellowing and contained pinholes. While the intercoat adhesion with the PVdF topcoat was good, the mechanical properties were poor (reverse impact < 1 N.m).

The adhesion of the primer of Comparative Example 4 on aluminium and its intercoat adhesion with the PVdF topcoat were bad.

**Claims**

1. Powder composition comprising as binding agent
(i) from about 5 to about 15 % by weight, based on the total weight of the product, of a thermosetting binder system based on a resin compatible with PVdF, and
(ii) from about 50 to about 90 % by weight, based on the total weight of the product, of a thermosetting binder system based on a resin incompatible with PVdF.

2. Powder composition according to claim 1, wherein the thermosetting binder system is based on a solid epoxy resin with an appropriate curing agent.

3. Powder composition according to any one of claims 1 and 2, containing from 0 to about 35 wt % of pigments.

4. Powder composition according to claim 3, containing from 5 to about 25 wt% of pigments.

5. Powder composition according to any one of claims 1 and 2, containing up to 3 wt % of a levelling agent.

6. Powder composition according to claim 5, containing about 1 wt % of a levelling agent.

7. Powder composition according to claim 2, wherein the epoxy resin is produced by reaction of epichlorhydrin and bisphenol A and has an epoxy equivalent weight of from 400 to 1800.

8. Powder composition according to claim 2, wherein the curing agent is dicyandiamide-based.

9. Powder composition according to claim 8, wherein dicyandiamide is used in an amount of from about 4 % to about 10% by weight of the epoxy resin.

10. Powder composition according to any one of claims 1 to 5, wherein the thermosetting system based on a resin compatible with PVdF is used in an amount of about 8% by weight, based on the total weight of the composition.

11. Powder composition according to any one of claims 1 to 9, wherein the resin compatible with PVdF is selected from the group consisting of fluorinated polymers, acrylic polymers, and mixtures thereof.

12. Powder composition according to any one of claims 1 to 11, further containing up to 4% by weight, based on the total weight of the composition, of a thermoplastic resin compatible with PVdF.

13. Powder composition according to claim 12, wherein the acrylic polymers are copolymers of about 70 wt % of methyl methacyrlate with about 30 wt % of ethyl acrylate, said copolymers exhibiting a viscosity of about 7 to 17 P when in 40 % solution in a solvent mixture which is a 95:5 by weight mixture of toluene and ethylene glycol methyl ester.

14. Use of the powder composition according to any one of claims 1 to 12 to prepare a primer coating suitable for later application of a PVDF-based top coating.

15. Substrate coated with the powder primer composition according to any one of claims 1 to 12.

16. Process for coating a substrate with a primer coating, said primer coating being suitable for later application of a pigmented PVdF-based top coating by applying a pigmented PVdF-based powder on said primer coating and subjecting it to a heat treatment at a temperature of about 180 to 260°C, said process comprising the steps of

(i) applying the primer powder according to any one of claims 1 to 12 on a substrate to form a primer coating, and

(ii) subjecting the primer coating to a heat treatment at a temperature of about 160 to 240°C.

## DOCUMENTS CONSIDERED TO BE RELEVANT

| Category | Citation of document with indication, where appropriate, of relevant passages | Relevant to claim | CLASSIFICATION OF THE APPLICATION (Int. Cl⁵) |
|---|---|---|---|
| A | EP-A2-0 214 448 (PPG INDUSTRIES, INC.) <br> *Example 1, page 14; claims 1-17* <br><br> --- | 1-2,7, | C 09 D 5/03, <br> C 09 D 201/00// <br> (C 09 D 201/00 <br> 127:12, <br> 133:10, <br> 163:02) |
| A | GB-A-1 413 681 (UCB OF 4 CHAUSSEE CHARLEROI) <br> *Abstract* <br><br> --- | 1 | |
| A | GB-A-1 432 928 (FORD MOTOR COMPANY LIMITED) <br> *Abstract* <br><br> --- | 1 | |
| A | DATABASE WPIL, no. 89-089835/12, Derwent Publications Ltd, London, GB; & JP-A-1040329 (NIPPON PAINT KK) 10-02-89 <br> *Abstract* <br><br> -------- | 1-2, 14-15 | |

TECHNICAL FIELDS SEARCHED (Int. Cl⁵)

C 09 D

The present search report has been drawn up for all claims

| Place of search | Date of completion of the search | Examiner |
|---|---|---|
| STOCKHOLM | 18-09-1990 | NILSSON B. |